# EUROPEAN PATENT APPLICATION

(11) **EP 4 220 936 A1**
(43) Date of publication of application: **02.08.2023**
(21) Application number: 22154353.1
(22) Date of filing: 31.01.2022
(51) Int. Cl.: H02P 21/06, H02P 6/17, H02P 6/16, H02P 25/22

(54) **CONTROL METHOD FOR A PERMANENT MAGNET SYNCHRONOUS MACHINE USING LOW RESOLUTION SENSORS**

(71) Applicant: Siemens Gamesa Renewable Energy A/S, 7330 Brande (DK)
(72) Inventor: Freire, Nuno Miguel Amaral, 7330 Brande (DK); Godridge, Paul, Cheadle, SK8 7HX (GB); Wu, Zhan-Yuan, Sheffield, S10 4BB (GB)
(74) Representative: SGRE-Association

(57) **Abstract**

It is described a method of vector control of a permanent magnet synchronous electrical machine system (6), in particular of a wind turbine (1), comprising a stator (28) with stator windings (7, 8) and a rotor (30) with permanent magnets (31), the method comprising: obtaining measurement signals (24a,b,c) from at least three Hall-sensors (21,22,23) installed at predetermined positions at the stator (28); determining an electrical rotor position (θe1, θe2) based on the measurement signals (24a,b,c) of the at least three Hall-sensors; utilizing the determined electrical rotor position (θe1, θe2) for vector control of the electrical machine system (6).

## Description

### Field of invention

The present invention relates to a method and a corresponding arrangement of vector control of a permanent magnet synchronous electrical machine. Furthermore, the present invention relates to a permanent magnet synchronous electrical machine and further relates to a wind turbine comprising the permanent magnet synchronous electrical machine.

### Art Background

Conventionally, for controlling a permanent magnet synchronous machine, the rotor position may be required to be known. The rotor position may for example be required in order to perform a frame transformation, in particular from an αβ-frame to a rotating frame, in particular a dq-frame rotating synchronously with the rotor.

In the wind turbine technical field, the electrical drive train for example of a direct drive turbine may be required to enable various modes or functions other than power production. For example, rotor positioning may be required which requires to turn the rotor of the wind turbine slowly (for example at a fraction of rpm) and hold it stationary at a target rotor position such that the rotational speed is substantially zero or close to zero. Rotor positioning may for example be performed for or during maintenance activities, blade de-icing procedures, among others. All those kinds of actions or functions may require the wind turbine generator to produce a torque at low or close to zero rotational speed.

Conventionally, torque control of a permanent magnet generator may be achieved by implementing an inner current controller which may require the accurate and high resolution electrical rotor position (for example for a park transformation or an inverse park transformation). If the rotor position information is not available or is unreliable, the torque generated by the generator may be unpredictable. Thus, the turbine ability to provide the aforementioned functions may be impaired and its structural integrity may be put at risk.

It has been observed that sensorless methods (for example back-EMF based methods) which may have been employed for position estimation under power production mode (medium/high speed operation) may fail at very low rotational speeds. Some machine technologies (for example interior PM machines) may be well suited for alternative sensorless methods like high-frequency signal injection based observers. On the other hand, surface mounted permanent magnets and fractional slot concentrated winding machines may not offer a good enough position dependent signature for sensorless methods, forcing the adoption of sensors for position measurement.

EP 2 623 767 B1 discloses a method for rotor positioning or turning from zero speed.

In contrast to distributed winding generators, new concentrating winding (CW) generators appear not to have the desired position dependent signature required for the operation of a position observer based on high-frequency signal injection (HFI) which may have been used conventionally. Absolute encoders (resolvers) may be a common choice for electrical drives in order to determine rotor position. However, those are expensive and are difficult to install. Hall sensors or Hall-effect (HE) sensors may have been utilized for brushless DC motors. HE sensors may also have been utilized for the start-up of permanent magnet synchronous machines. The following publications may be considered:
L. M. Gong and Z. Q. Zhu, "Robust Initial Rotor Position Estimation of Permanent-Magnet Brushless AC Machines With Carrier-Signal-Injection-Based Sensorless Control," in IEEE Transactions on Industry Applications, vol. 49, no. 6, pp. 2602-2609, Nov.-Dec. 2013.
R. Carlson, M. Lajoie-Mazenc and J. C. d. S. Fagundes, "Analysis of torque ripple due to phase commutation in brushless DC machines," in IEEE Transactions on Industry Applications, vol. 28, no. 3, pp. 632-638, May-June 1992, doi: 10.1109/28.137450.
TI Designs - 18-V, 400-W, 98% Efficient Compact Brushless DC Motor Drive With Stall Current Limit Reference Design. Available: https://www.ti.com/tool/TIDA-00772
A. Lidozzi, L. Solero, F. Crescimbini and A. Di Napoli, "SVM PMSM Drive With Low Resolution Hall-Effect Sensors," in IEEE Transactions on Power Electronics, vol. 22, no. 1, pp. 282-290, Jan. 2007, doi: 10.1109/TPEL.2006.886603. This document uses a combination of a low resolution position provided by HE sensors and high resolution sensors from a back-emf observers for high resolution determination of rotor position. Further, the high resolution position is used for frame transformations. However, back-emf observers fail at low speeds.
F. Giulii Capponi, G. De Donato, L. Del Ferraro, O. Honorati, M. C. Harke and R. D. Lorenz, "AC brushless drive with low-resolution Hall-effect sensors for surface-mounted PM Machines," in IEEE Transactions on Industry Applications, vol. 42, no. 2, pp. 526-535, March-April 2006, doi: 10.1109/TIA.2005.863904.

Due to one or more of the above-mentioned conventional problems, there may be a need for a method and a corresponding arrangement of vector control of a permanent magnet synchronous electrical machine, wherein control is improved and reliability and/or performance may be improved.

### Summary of the Invention

This need may be met by the subject matter according to the independent claims. Advantageous embodiments of the present invention are described by the dependent claims.

According to an embodiment of the present invention it is provided a method of vector control of a permanent magnet synchronous electrical machine system, in particular of a wind turbine, comprising a stator with stator windings and a rotor with permanent magnets, the method comprising: obtaining measurement signals from at least three Hall-sensors installed at predetermined positions at the stator; determining an electrical rotor position based on the measurement signals of the at least three Hall-sensors; utilizing the determined electrical rotor position, in particular as the sole position information, for vector control of the electrical machine.

The method may for example be performed by a control portion or a controller, in particular of a wind turbine, and may be implemented in software and/or hardware. The rotor may be an outer rotor or an inner rotor.

The stator may be a single segment stator forming a whole (360°) circumference or may be a segmented stator comprising two or more stator segments which when assembled form a whole circumference. For example, the stator may comprise exactly two stator segments, exactly three stator segments, four stator segments or even more stator segments. Each stator segment may comprise one or more winding set(s) comprising for example windings providing multiple phases, such as three phases. Each winding set may be electrically connected to a corresponding converter which may be capable of converting a variable frequency AC power stream to a fixed frequency AC power stream (in power generating mode, when power flow from the generator via the converter to the utility grid). In motoring mode (when power flows from the grid to the generator) the converter converts from fixed frequency to variable frequency.

The Hall-effect sensors may employ or exploit the Hall-effect, enabling the Hall-sensors to detect a magnetic field (of one of the permanent magnets) without requiring the rotor to rotate. Thus, the Hall-sensors are capable of detecting the magnetic poles of the permanent magnets even at standstill. The at least three Hall-sensors may be installed adjacent to each other in the circumferential direction at the stator. The Hall-sensors may for example be installed at different circumferential positions at the stator but at substantially same radial position and also essentially same axial position. The axial direction may be the direction of the rotational axis of the rotor. The radial direction and the circumferential directions are perpendicular to the axial direction.

The predetermined positions at the stator may be dependent on the stator geometry, and/or the winding topology of the stator windings. The at least three Hall-sensors may be positioned such that they are offset or shifted relative to each other according to a particular electrical angle, in particular 120°. The method may employ more than three Hall-sensors, such as six Hall-sensors or even more Hall-sensors, in order to improve the resolution of the determination of the electrical rotor position. For determining the electrical rotor position, all measurement signals, i.e. at least three measurement signals of the at least three Hall-sensors, may be utilized. The method may not require to utilize other rotor position information, like employed in sensorless methods where rotor position is estimated from electrical properties of the machine.

The vector control may control one or more electrical and/or mechanical quantities, such as torque, position, current, voltage, power and may therefore employ one or more controllers, like PI controllers which may act on error inputs which may be derived from substantially DC quantities. The DC quantities may be obtained by transforming electrical quantities into a rotating dq-coordinate frame rotating synchronously with the rotor. Thereby, a Park transformation and a respective inverse Park transformation may be employed which may require the electrical rotor position. Vector control may comprise a field oriented control (FOC). The vector control may for example comprise to measure an actual current and transform the actual current in a d-component and a q-component being components of the dq rotational system rotating synchronously with the rotor. The vector control may for example comprise to derive a reference voltage based on an output of a PI controller which receives as input an error signal between the actual current (transformed in the dq-coordinate system) and a reference current also transformed into the dq-coordinate system. Depending on the quantity to be controlled, the PI controller may receive other inputs, such as torque, position, power, etc. Thereby, a reliable operation of the synchronous machine may be achieved, in particular for a wind turbine generator.

According to an embodiment of the present invention, determining the electrical rotor position is based on a combination of observed high and low states of the measurement signals of the at least three Hall-sensors enabling determination of the rotor position to be within one of plural angle ranges, wherein the number of angle ranges is in particular 6 or 12, each angle range spanning in particular 60° or 30°. Raw outputs of the hall sensor may be binary signals from digital type sensors, or analogue signals (e.g. indicating strength of magnetic field), which may be processed or converted to binary signals, e.g. comprising a high state and a low state.

The combination of observed high and low states may for example comprise that one or more of the Hall-sensors generate a high signal and one or more of the Hall-sensors generate a low signal. The states of all the Hall-sensors in combination may be considered to determine the rotor position to be within one of the plural angle ranges. When exactly three Hall-sensors are employed, the rotor position may be determined to an accuracy of 60°. When (exactly) six Hall-sensors are employed, the rotor position may be determined to an accuracy of 30°. Thereby, a reliable determination of the rotor position may be achieved.

According to an embodiment of the present invention, determining the electrical rotor position comprises determining a preliminary rotor position to be in one of plural angle ranges; applying error compensation of the preliminary rotor position using rotation test data, in particular involving adding a constant or variable offset angle to the preliminary rotor position.

The Hall-sensors may be malpositioned (with respect to a desired or target position) at the stator, in particular circumferentially. In order to compensate for the malpositioning or any other faults or errors, the error compensation may be applied to the preliminary or raw rotor position information. The rotor or the rotation test data may for example comprise data of known rotor positions, which may for example be determined by other sensors or other methodologies, for example employing absolute encoders or terminal voltage sensors. The rotation test data may be considered as training data. The rotation test data may therefore enable a calibration of the determination of the rotor position from the at least three Hall-sensors. The error compensation may involve to add to the preliminary rotor position a constant or variable offset angle. Thereby, malpositioning or any other sources of possible errors or faults may be compensated or calibrated for.

According to an embodiment of the present invention, determining the electrical rotor position comprises applying a rate limitation to the preliminary position or the error compensated preliminary position to obtain a rate limited rotor position.

The rate limitation may be considered as a smoothing or slewing of the preliminary position or the error compensated preliminary position, such that the change rate of the rate limited rotor position is smaller than the change rate of the preliminary position or the error compensated preliminary position. Rate limitation may be advantageous when utilized in vector control, since physically it is not possible for the rotor position to instantaneously change for example by 60° or 30° in one instance. Thus, the rate limitation may avoid abrupt or instant changes of the (according to the inventive method) determined rotor position by a substantial amount like 60° or 30°. Thereby, also the control of the machine may be improved.

According to an embodiment of the present invention, the rate limitation is limiting the rate of change of the rotor position, wherein the allowed rate of change is in particular adjustable, wherein the rated limited rotor position is in particular obtained by incrementing/decrementing the preliminary rotor position or error compensated preliminary rotor position by the maximum allowed rate of change in a control/processing period.

The allowed rate of change may be adjusted according to the particular application, for example depending on the geometry of the machine, the winding topology and others. The rate of change may also be adjusted depending on the quantity which is to be controlled, for example torque, current, rotor position. The rate limited rotor position may be obtained by limiting the change of position in a control period, thus slewing the rotor position across a predetermined time span . As an example, the rate limitation may therefore convert a stepwise change of the rotor position into a continuous smooth change of the rotor position which may approximate the true rotor position. Thereby, the rate limitation may advantageously convert the low resolution electrical rotor position as is obtained from the raw measurement data of the Hall-sensors into a smoothly changing rotor position which may reflect to a better degree the real rotor position and which may be applicable in an advantageous way for vector control of the electrical machine.

Slewing a signal may mean limiting the signal rate of change. Thus, from time instant t-1 to instant t, the signal cannot change more than a predefined value.

According to an embodiment of the present invention, utilizing the determined electrical rotor position for vector control comprises using the electrical rotor position for frame transformation and optionally for a position controller, wherein the rotor position is in particular used for Park-transformation and/or inverse Park-transformation of current and/or voltage values.

Thereby, vector control of the machine may be improved compared to prior art. For the frame transformation, exclusively the rotor position as determined by the above-described method may be utilized, i.e. based on the at least three Hall-sensors, without additionally using other information, such as information from sensorless methods. In particular, the sensorless methods may fail at low rotational speed close to zero. The current and/or voltage values may be values supplied or generated by the electrical drive, in particular a generator and a converter.

According to an embodiment of the present invention, the method further comprises calculating rotor speed based on a time duration between state changes among the at least three of the Hall-sensors or based on the rotor position evolving with time. Also the rotor speed may be employed for vector control. Thereby, different control objectives or control goals may be achieved.

According to an embodiment of the present invention, the vector control employs at least one of torque control; rotor position control; current control; rotational speed control, of the machine.

Thereby, for example, the torque of the machine, at a rotational speed close to zero may be appropriately controlled, for example for particular applications. Also rotor positioning control may be necessary during assembling and/or maintenance. Current control and/or power control may be required during normal operation. Further, rotational speed control may enable to arrive at a reference rotational speed. Other control objectives may be possible. Thereby, great flexibility may be provided.

According to an embodiment of the present invention, the Hall-sensors are installed at predetermined positions at the stator such as to detect position of magnetic poles of the permanent magnets and such that the three Hall-sensors are electrically offset to each other by 120° or complementarily 60° if the inverse state of at least one signal is used, wherein in particular the at least three Hall-sensors are installed at or within cooling air ducts of the stator, for example.

The Hall-sensors may be installed such as to sense the magnetic fields of the permanent magnets. When the three Hall-sensors are electrically offset to each other by 120°, the rotor position may be determined by an accuracy of 60° of electrical angle. In particular, when the Hall-sensors are installed at or within cooling air ducts of the stator, a simple installation may be enabled. Further, the Hall-sensors may be very cost-effective.

According to an embodiment of the present invention, the at least three Hall-sensors comprise a first set of at least three Hall-sensors and at least one second set of at least three Hall-sensors, wherein collectively the first set is electrically displaced by for example 30° relative to the second set.

Thus, in particular, at least six Hall-sensors may be installed at different circumferential positions at the stator. When six Hall-sensors are utilized, the rotor position may be determined by an accuracy of 30°. Thereby, the rotor determination resolution may be improved. The first set may be electrically displaced or offset by 30° relative to the second set of sensors.

According to an embodiment of the present invention, the method is performed during low rotor speed, in particular between 0% and 20% of rated speed, wherein the method is in particular performed for starting, running at low rotational speed exhibiting low torque ripple.

The method may in other embodiments also be applied at medium or high rotor speed, such as rotor speed above 20% of the nominal rotor speed. The method may not only be performed during a start interval but may be performed continuously for increasing rotational speed. The method may for example be performed during or for plural revolutions of the rotor, such as between 1 and 1000 revolutions of the rotor or even more revolutions of the rotor. Thereby, flexibility may be improved.

According to an embodiment of the present invention, at least one of the following holds: the stator has concentrated winding topology or distributed winding topology providing three phases; the stator has at least one (or two or more) stator winding set(s), each providing plural phases, in particular three phases; the machine comprises a three phase generator having at least one (or two or more) set(s) of stator windings each of which is connected to a converter; at least one converter electrically connected to the stator windings is controlled based on the rotor position.

Thereby, the method may be applied to a number of different generator types and topologies.

It should be understood, that features, individually or in any combination, disclosed, described or applied for a method of vector control of a permanent magnet synchronous electrical machine are also, individually or in any combination, applicable to an arrangement for vector control of a permanent magnet synchronous electrical machine.

According to an embodiment of the present invention it is provided an arrangement for vector control of a permanent magnet synchronous electrical machine system, in particular of a wind turbine, comprising a stator with stator windings and a rotor with permanent magnets, the arrangement comprising at least three Hall-sensors installed at predetermined positions at the stator and configured to generate measurement signals indicating proximity of magnet poles; a determining section configured to determine an electrical rotor position based on the measurement signals of the at least three Hall-sensors; and a control section configured to utilize the determined electrical rotor position for vector control of the electrical machine.

The arrangement may for example be comprised in a controller of the machine, in particular in a wind turbine controller.

The arrangement may receive one or more reference values, such as reference current and/or reference power and/or reference voltage and/or reference torque and may receive respective actual (e.g. measurement of) physical quantities corresponding to the quantities to be controlled.

Those actual quantities may be transformed into the dq-coordinate frame thereby utilizing the rotor position as determined by analyzing the measurement values of the at least three Hall-sensors. The arrangement may output a reference value or reference values, for example reference voltage and/or reference torque and/or reference power. The one or more reference values may be supplied to one or more converters which may be electrically coupled to one or more winding sets of the electrical machine, in particular a generator. Thus, the control section may output corresponding control signals representing one or more reference values.

According to an embodiment of the present invention it is provided a permanent magnet synchronous electrical machine system, in particular of a wind turbine, comprising a stator with stator windings; a rotor with permanent magnets; at least one converter electrically connected to the stator windings; and an arrangement for vector control according to the preceding claim communicatively coupled to the at least one converter.

The stator may be a single or integral stator (spanning a whole circumference) or may comprise two or more stator segments forming when assembled a whole circumference. Each stator segment may comprise one or more separate stator winding set(s). For each stator segment and for each set of stator windings, a corresponding converter may be arranged or provided and electrically connected to the respective stator winding set.

According to an embodiment of the present invention it is provided a wind turbine comprising a permanent magnet synchronous electrical machine according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention;
Fig. 2 schematically illustrates a generator segment of a permanent magnet synchronous electrical machine according to an embodiment of the present invention;
Fig. 3 illustrates a method scheme for vector control according to an embodiment of the present invention;
Fig. 4 illustrates a method scheme of a vector control method according to an embodiment of the present invention;
Fig. 5 illustrates measurement signals of Hall-sensors as employed in embodiments of the present invention;
Fig. 6 illustrates a generator torque as achieved according to embodiments of the present invention;
Fig. 7 illustrates a method scheme for a vector control method according to an embodiment of the present invention;
Fig. 8 illustrates measurement signals of Hall-sensors as employed in embodiments of the present invention;
Fig. 9 illustrates a torque as achieved in a control method according to an embodiment of the present invention;
Fig. 10 illustrates measurement signals of Hall-sensors as employed in embodiments of the present invention;
Fig. 11 illustrates a torque as generated by a vector control method according to an embodiment of the present invention;
Figs. 12 and 13 illustrate torque as generated by embodiments of a vector control method;
Fig. 14, 15, 16 illustrate rotor position as well as achieved torque as achieved according to a vector control method according to an embodiment of the present invention, wherein different angle rate of change limits are utilized.

### Detailed Description

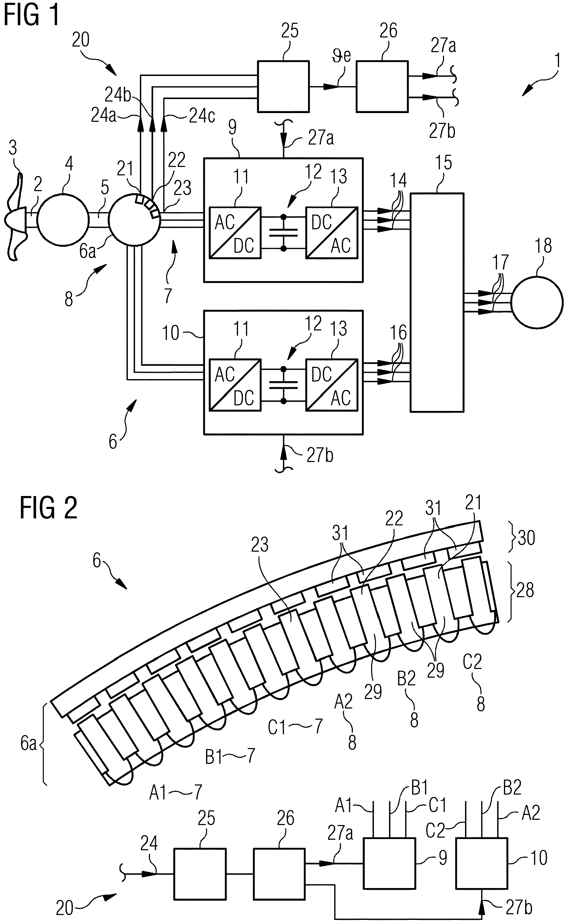

The wind turbine 1 schematically illustrated in **Fig. 1** comprises a rotor shaft 2 at which plural rotor blades 3 are mounted. The rotor shaft 2 is mechanically coupled to an optional gearbox 4 to which a secondary shaft 5 is coupled. The secondary shaft 5 is mechanically coupled to a permanent magnet synchronous electrical machine, in particular generator 6a. The generator 6a is in the illustrated embodiment configured as a dual three-phase permanent magnet electrical machine and is part of a permanent magnet electrical machine system 6 further comprising converters 9, 10.

In particular, the generator 6a comprises two stator winding sets (other embodiments may have a single winding set), namely a first winding set 7 and a second winding set 8, each providing three phases. The generator 6a may be a segmented generator for example comprising two, three, four or for example twelve or even more generator segments.

The first three-phase winding set 7 is electrically coupled to a first converter 9 and the second stator winding set 8 is electrically coupled to a second converter 10. Each of the converters 9, 10 comprise a generator side portion 11, a DC link 12 and a utility grid portion 13. The generator side portion 11 is configured as an AC/DC converter configured for converting a variable frequency power stream to a DC power stream. The DC link 12 is configured as a small energy buffer to smooth the DC voltage. The utility grid converter portion 13 is configured as a DC/AC converter portion which is configured to convert the DC power stream received from the DC link 12 to a substantially fixed frequency AC power stream. Thus, the first converter 9 outputs a first three-phase AC output stream 14 to a transformer 15 which receives also a second AC output stream 16 from the second converter 10.

The wind turbine transformer 15 transforms the output voltage to a higher voltage and supplies the total amount stream 17 to the utility grid 18.

For controlling the permanent magnet synchronous generator system 6, the wind turbine 1 comprises an arrangement 20 for vector control. The arrangement 20 comprises at least three Hall-sensors 21, 22, 23 which are installed at predetermined positions at the stator of the generator 6a and are configured to generate measurement signals 24a, 24b, 24c indicating proximity of magnet poles of the rotor of the permanent magnet generator 6a. The arrangement 20 further comprises a determining section 25 configured to determine an electrical rotor position θe based on the measurement signals 24a, 24b, 24c of the at least three Hall-sensors 21, 22, 23. The arrangement 20 further comprises a control section 26 which is configured to utilize the determined electrical rotor position for vector control of the electrical machine 6. Thereby, the control section generates control signals 27a for the first converter 9 and control signals 27b for the second converter 10. Based on the control signals 27a, 27b, plural controllable switches within the first converter 9 and the second converter 10 are controlled regarding their conduction states.

**Fig. 2** schematically illustrates a cross-sectional view of a segment of a generator 6a of a permanent magnet synchronous electrical machine system 6 according to an embodiment of the present invention. The permanent magnet synchronous electrical machine 6a illustrated in Fig. 2 as a section thereof comprises a stator segment 28 with stator windings A1, B1, C1 belonging to the first winding set 7 and comprising stator windings A2, B2, C2 belonging to the second winding set 8 as illustrated in Fig. 1. The stator windings are arranged around teeth 29 of the stator 28. In Fig. 2, regarding the stator windings, the first capital letter denotes the phase, the number following the letter denotes the first or second winding set.

The generator segment of the generator 6a illustrated in Fig. 2 further comprises a rotor segment 30 with permanent magnets 31 mounted thereon. The generator 6a is coupled with the first converter 9 and the second converter 10, as is illustrated in Fig. 1. In particular, the windings or wires carrying phases A1, B1, C1 are connected to the first converter 9 and the wires carrying the phases A2, B2, C2 are connected to the second converter 10. Furthermore, the system 6 comprises the arrangement 20 comprising the Hall-sensors 21, 22, 23 installed at the stator 28 as well as the determining portion 25 and the control portion 26.

The permanent magnet synchronous electrical machine system 6 comprises the permanent magnet synchronous electrical machine 6a and the converters 9, 10 as well as the arrangement 20.

The generator segment illustrated in Fig. 2 is configured as a segment of a concentrated winding dual three-phase electrical generator. Other embodiments may control other configurations of permanent magnet synchronous machines, such as single permanent magnet synchronous machines or machines having other winding topology. In Fig. 2, the electrical machine has a concentrated winding topology. Other embodiments may support a distributed winding topology.

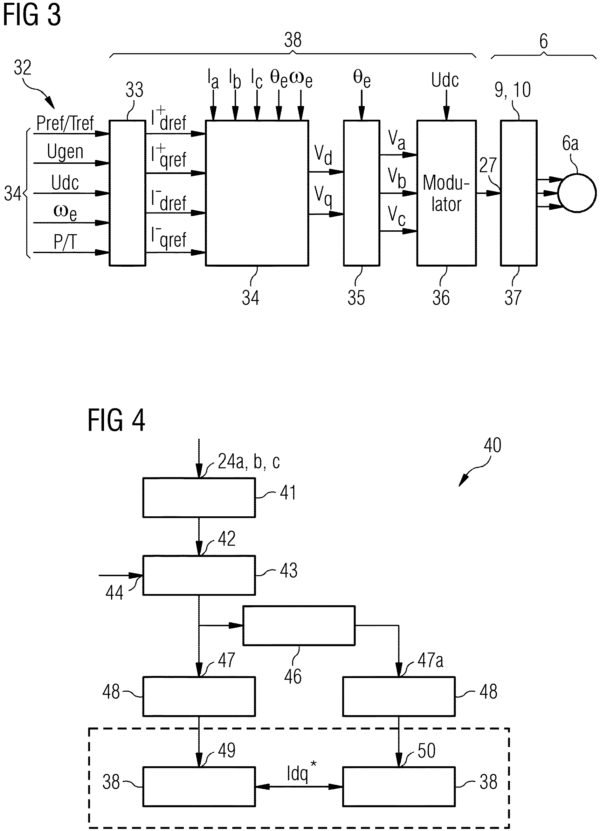

**Fig. 3** illustrates a method scheme of vector control according to an embodiment of the present invention. The method scheme 32 of vector control comprises a current reference calculation module 33 which receives input signals 34 for example including reference power/reference torque, generator voltage, DC link voltage, the electrical rotational speed and the actual power/actual torque of the generator. The current reference calculation module 33 outputs reference values of the current in the dq-coordinate system rotating synchronously with the rotor 30 of the generator 6a.

The reference values of the currents are supplied to a current controller 34 which further receives the actual currents in the ABC rotational frame, the electrical rotor position θe and the electrical rotational speed ωe. The current controller outputs voltages Vd and Vq in the dq-coordinate system and supplies those to a frame transformation module 35. The frame transformation module 35 transforms the quantities in the dq-coordinate system into quantities in the ABC coordinate system and therefore receives the electrical rotor position θe. The transformation module 35 outputs the voltages Va, Vb, Vc in the ABC coordinate system and supplies those to a modulator 36. The modulator 36 receives the DC link voltage and outputs control signals 27 (e.g. 27a, 27b) to the converter system comprising for example the first converter 9 and the second converter 10.

As can be appreciated from Fig. 3 for performing the vector control scheme 32, the electrical rotor position θe as well as the electrical rotational speed ωe are required, in particular for performing frame transformations, in particular for performing the Park-transformation and the inverse Park-transformation. The electrical rotor position θe is determined according to embodiments of the present invention utilizing the at least three Hall-sensors 21, 22, 23.

The scheme portion 38 of the method 32 in Fig. 3 may also be considered as a field-oriented control as performed according to embodiments of the present invention.

**Fig. 4** schematically illustrates a method scheme 40 of vector control of a permanent magnet synchronous electrical machine system according to an embodiment of the present invention.

An angle map module 41 receives the measurement signals 24a,b,c of the at least three Hall-sensors 21, 22, 23 as illustrated in Fig. 1. The angle map module 41 outputs a preliminary rotor position 42 based on the measurement signals 24a,b,c. An error compensation module 43 which may be optional calculates, in particular based on data from rotational tests 44, an error compensated preliminary rotor position 47 (and a shifted error compensated preliminary rotor position 47a) which may be used for controlling the first converter 9 of a dual permanent magnet electrical machine. Using a phase-shift module 46, from the error compensated electrical rotor position 45, a shifted rotor position 47 is calculated, wherein the shift module for example shifts the rotor position by 30° corresponding to the electrical phase-shift of the first stator winding 7 and the second stator winding 8.

The error compensated electrical rotor positions 45, 47 are then supplied to respective rate limiting modules 48. The rate limiting modules 48 apply a rate limitation to the preliminary position or the error compensated preliminary position 45, 47, to obtain a rate limited rotor position 49 and 50, for the first converter and the second converter, respectively. The rate limitation modules 48 perform a slewing of the error compensated electrical rotor positions 45, 47. Thereby, abrupt changes of the determined electrical rotor position are smoothed thereby enhancing the field oriented control 38 which receives the rate limited rotor positions 49, 50, respectively. The field oriented control modules 38 illustrated in Fig. 4 may substantially comprise components of the portion 38 as illustrated in the method scheme 32 in Fig. 3.

From the (error compensated preliminary) rotor positions 47, 47a, the rotor speed or in particular the electrical rotor speed ωe can be determined for example based on time duration between state changes of the at least three Hall-sensors. Thereby, the rotor speed ωe may be obtained which is also utilized in the method portion 38 of the vector control or the field oriented control.

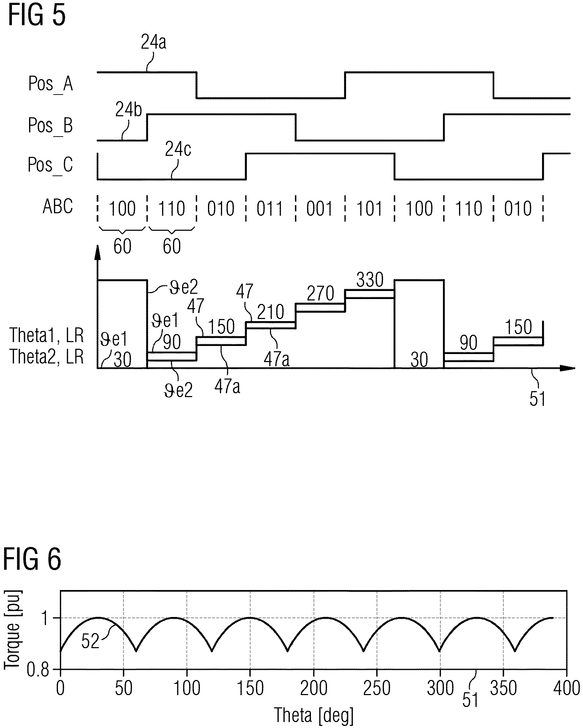

**Fig. 5** illustrates in a coordinate system having as an abscissa 51 the electrical rotor position, measurement signals 24a, 24b, 24c of the three Hall-sensors 21, 22, 23 denoted as pos_A, pos_B, pos_C. As can be appreciated from Fig. 5, the measurement signals 24a, 24b, 24c indicate either a high state or a low state. The combination of high state(s) and low state(s) in a particular interval indicates one of plural angle ranges 60 which spans 60°. For example, if the first measurement signal 24a is high and the second and third measurement signal 24b, 24c is low it corresponds to the combination "100". In this sector or angle range "100", the electrical rotor position θe1 is 30° and the rotor electrical position θe2 corresponding to the second winding set of the stator is 0 or 360°. The electrical first rotor position θe1 is also denoted or labelled with reference sign 47 as used in Fig. 4 and the second electrical rotor position θe2 is labelled with reference sign 47a. To each of the angle ranges 60, a particular combination of high and low states is associated and correspondingly a particular electrical rotor position is associated, wherein subsequent rotor positions differ by 60°. The second rotor position 47a is shifted by 30° relative to the first position 47.

**Fig. 6** illustrates in a coordinate system having as an abscissa 51 the electrical rotor position the torque 52 achieved when a vector control method according to an embodiment of the present invention, in particular according to Figs. 4 and 5, is performed.

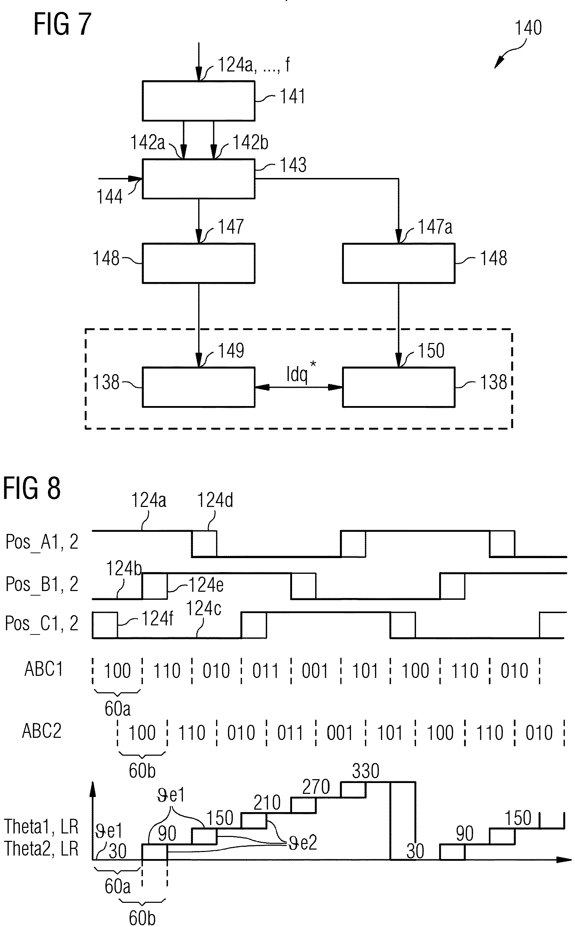

**Fig. 7** illustrates a method 140 of vector control according to another embodiment of the present invention. Thereby, the stator has at least six Hall-sensors installed at the stator, which deliver measurement signals 124a, 124f.

An angle map module 141 performs an analysis similar to the angle map module 41 illustrated in Fig. 4 for associating each combination of measurement signals within each set of Hall-sensors to a particular preliminary rotor position 142a, 142b for the electrical rotor position of the first winding set 7 and the second winding set 8, respectively.

The error compensation module 143 performs a similar error compensation based on data from rotation tests 144 as the error compensation module 43 illustrated in Fig. 4. The error compensated first electrical rotor position 145 and the second error compensated rotor position 147 are supplied to corresponding rate limitation modules 148, 148, respectively. The rate limitation modules 148 perform rate limitation of the error compensated preliminary rotor positions to derive the rate limited rotor positions 149, 150, respectively. The rate limited rotor positions are supplied to respective field oriented control modules 138.

**Fig. 8** illustrates the measurement signals 124a, ..., 124f of a first set of three Hall-sensors (generating the measurement signals 124a,b,c) and a second set of three Hall-sensors (generating the measurement signals 124d,e,f). The combination of measurement signals 124a,b,c defines angle ranges 60a similar as in Fig. 5, thereby defining the first electrical angle θe1. Similarly, the combination of the measurement signals 124d,e,f in angle ranges 60b defines the second electrical rotor position θe2. Thus, the embodiment illustrated in Figs. 7 and 8 employs six Hall-sensors for a dual three-phase machine with 30° shift.

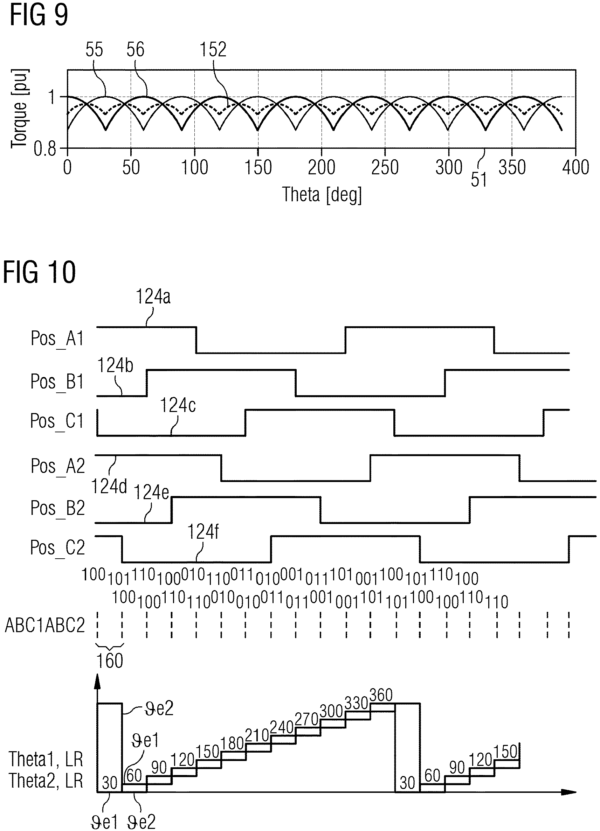

**Fig. 9** illustrates in a coordinate system having an abscissa 51 the electrical rotor position, the torque as achieved when using six Hall-sensors for a dual three-phase electrical machine as illustrated in Figs. 7 and 8. The torque generated (normalised per set) by the first stator windings 7 is denoted with reference sign 55, the torque generated by the second winding set 8 with reference sign 56 and the total torque (normalised per machine) is indicated with reference sign 152.

**Fig. 10** again illustrates the measurement signals 124a,b,c of a first set of Hall-sensors and the measurement signals 124d,e,f of a second set of Hall-sensors which are electrically shifted with respect to the first set by 30°. In the embodiment illustrated in Fig. 10, the combination of high and low states of all measurement signals 124a,...,f are utilized to derive corresponding angle ranges 160 having a width of 30° and allowing to determine the electrical rotor position with an accuracy of 30°. The first electrical rotor position in the angle section denoted as for example "100101" is 30° and in the angle range denoted "100100" is 60°. Second electrical rotor position is shifted 30° with respect to the first electrical rotor position. Thereby, employing six Hall-sensors which are shifted to each other by 30° enables a determination of the electrical rotor position within an accuracy of 30°.

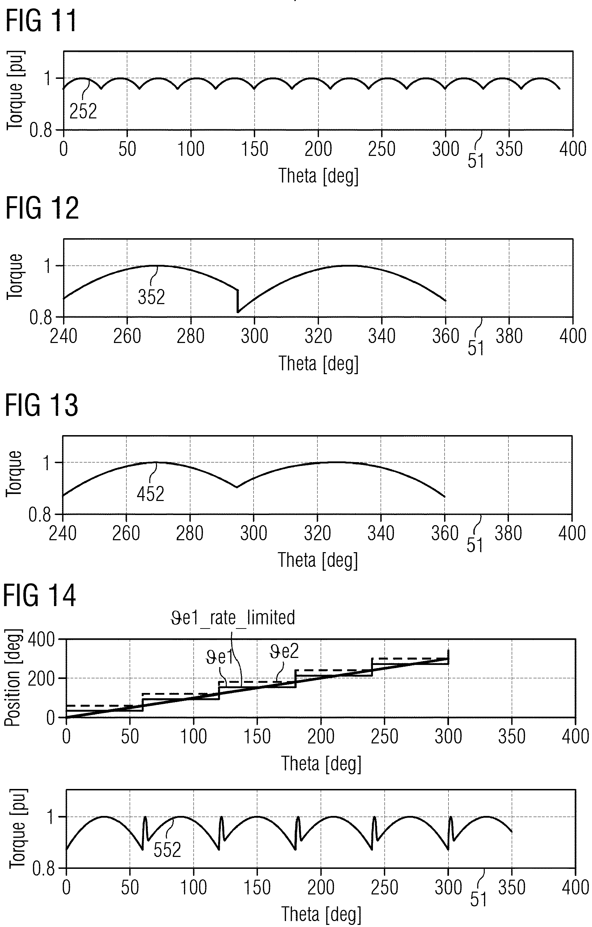

**Fig. 11** illustrates in a coordinate system having an abscissa 51 indicating the electrical rotor position, the torque 252 is the total normalised value as obtained when six Hall-sensors are employed and the rotor position is determined according to Fig. 10 with a resolution of 30°.

**Figs. 12 and 13** illustrate in coordinate systems 51 indicating the electrical rotor position the torque as obtained in a vector control method employing different slew rates, e.g. in the rate limitation modules 48, 148 of Figs. 4, 7. In particular, in Figs. 12 and 13, the sensors are misaligned by 6° in a dual three-phase concentrated winding generator having one set of three Hall-sensors, wherein in Fig. 12, a rate of change limitation is not performed while in Fig. 13, the rate of change limitation is applied, wherein the angle is slewed over 30°. It can be appreciated from Fig. 13 that the achieved torque 452 has less ripples than the torque 352 when no rate limitation is performed. Thus, rate limitation may improve the control.

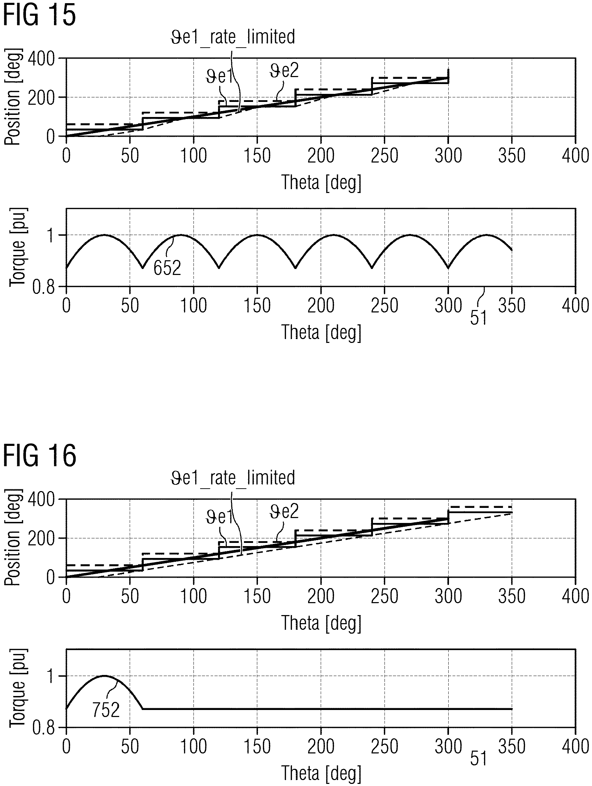

**Figs. 14****,** **15 and 16** indicate in graphs having as abscissas 51 the electrical angle, the first and second rotor positions θe1, θe2 or the rate limited rotor positions θe1_rate_limited, when slewed over 5° in Fig. 14, when slewed over 30° in Fig. 15 and when slewed over 60° in Fig. 16. Furthermore, the not rate limited second rotor position θe2 is indicated in all these figures. The resulting torque 552, 652, 752 for the different angle slewing ranges can be seen in Figs. 14, 15, 16 in the lower graph.

By limiting the rate of change of the position signal, current ripple in the control dq-frame (Idq1, low resolution) is minimized because the position signal is prevented from changing with infinite rate at sector boundaries (θe1) while feedback phase currents change with a finite rate (limited by generator inductance and current controller bandwidth). In theory, provided that the rate of change of position is lower than the bandwidth of the current controller, current ripple in the control dq-frame is eliminated by employing the rate limited rotor position for example θe1_rate_limited as indicated in Figs. 14, 15, 16. The impact on the torque ripple depends on the selected rate of change of the position signal. The Fig. 14 shows that the torque ripple may increase if the angle is slewed over 5°, whereas the peak-to-peak torque ripple may reduce if the angle is slewed over more than 30° (see Figs. 15, 16). It is worth noting that the concept of limiting the ramp rate over a given angle range is used here for the sake of illustration only, whereas for the real implementation, the slew rate may be time-based (e.g. degrees per second). Conversion from angle to time may be performed by employing average speed. The angle DC offset shown in Fig. 16 between the true electrical angle and the rate limited electrical angle due to rate limiter can be corrected to compensate the reduction in average torque. The Figs. 14, 15, 16 are based on one set of three Hall-sensors and the angle is slewed over 5° (Fig. 14), over 30° (Fig. 15) and over 60° (Fig. 16).

Simulations and experimental results have been obtained in embodiments of the present invention which show that the control method enables reliable start from 0 rpm and high torque production at very low speed (0.2 rpm for example). Torque ripple levels also show good agreement with theoretical analysis. The embodiments may also support or compensate for sensor misalignment of up to 12 electrical degrees or even more.

Embodiments of the present invention may provide a simple and robust solution for position and/or torque control at low or zero speed for wind turbines employing permanent magnet synchronous generators. The control method may be easy to integrate with existing control systems by making use of conventional vector control combined with a low resolution position signal. Further, a method of improvement and current control performance with use of low resolution position feedback is provided. Embodiments of the present invention are applicable to surface-mounted permanent magnets and fractional slot concentrated winding machines. Embodiments of the present invention may be applicable to a variety of machine topologies for example distributed winding, concentrated winding, single and multiple three-phase electrical machines. Embodiments of the present invention are also suited for multi-three-phase concentrated winding generators, for example dual three-phase concentrated winding topologies with 30° shift between winding sets enabling operation with low torque ripple.

In the following, some particular details are described which may be applied in particular embodiments of the present invention, to which, however, the invention is not restricted:
Three or six low cost digital-latch Hall-effect sensors may be utilized that are rated for a wide temperature range. The sensors may be embedded in the generator stator, for example they may be installed through or within cooling air ducts in the stator teeth. The Hall-sensors may be exactly 120° electrically apart from each other installed. Typically for an integer slot distributed machine, the sensors may be installed on every other teeth; for a fractional slot concentrated machine, the selection of teeth for sensor installation will be dependent on the electrical angle displacement between teeth. When the three Hall-effect sensors are thus placed, each sensor will produce a square waveform and between the three waveforms, there will be 120 electrical degrees in phase-shift. These sensor signals will provide electrical position with a low resolution of 60°. Provided that three or six Hall-effect sensors are installed and their measurement signals are available to the converter controller, the control method, for example illustrated in Fig. 4 or 7, may comprise the following steps:
(1) The sensor outputs are read (with an optional signal conditioning to remove glitches, etc.)
(2) The states of the three binary signals are mapped from the Hall-effect sensors to six angle sectors, i.e. a discrete position signal with 60° resolution, as is for example illustrated in Fig. 5. In the case when the number of sensors is doubled, i.e. six sensors are used, they can be used as two sets of three sensors. In each set, the three signals have a 120° shift between them and between the sets, there is a 30° shift, as is for example illustrated in Fig. 8. Alternatively, six sensors may be used to form twelve sectors of 30° resolution, as is for example illustrated in Fig. 10. Optionally, compensation of position displacement or error may be achieved by adding: (1) a constant offset to the low resolution position signal for example for adequate alignment of low and high resolution position signals; (2) variable offset as a function of current/load, when the distortion of the measured flux distribution due to saturation effects cannot be neglected.
   In the case of a little sensor misalignment due to installation, the electrical angle would not be exactly 60° between state changes of the three sensors. However, it has been investigated by analysis and tests that the adapted control method is robust and can tolerate a level of sensor misalignment, for example up to 15°. Therefore, the position errors may be neglected. Additionally, a sector-based parameter may be defined which value may need to be determined by a commissioning procedure, for example rotating the machine by a prime mover or motoring with use of different speed/position feedback source. Finally, this parameter value may be utilized for speed calculation.
(3) The average speed is calculated based on the duration of time between state change in the sensor measurement signals. By assuming equally spaced state changes (e.g. 60°), the speed is given as Ω = 2 x Pi/(6 * timeBetweenStateChange). The calculation can be a little adjusted in case that the sensor misalignment has to be considered, Ω = 2 x Pi/(360/actualSectorSize * timeBetweenStateChange). When timeBetweenStateChange exceeds a given threshold, the speed would be assumed extremely low and can be set to zero.
(4) Limit the rate of change of the position signal to reduce current and torque ripples. Current changes at a finite rate (limited by current controller bandwidth), thus position feedback must not change faster to enable good current reference tracking. Concerning torque ripples, torque ripple shall be reduced by the rate limiter in the presence of sensor misalignment.
(5) Feed the position and speed signals to vector control:
   a. position used by frame transformation (iabc to idq, vdq* to vabc*) and position controller;
   b. speed used for decoupling terms for current control, perhaps negligible for very low speed, and for speed control.
   c. position and speed used for vector control in the other channel of a dual three-phase generator.
(6) Generate current references for current control, Id reference is usually set to zero and this helps for minimum torque ripple, whereas Iq reference is generated by the position/speed/torque controller.

Concerning a dual three-phase machine with a phase-shift between windings (for example 30°), the position signal for the second channel θe2 may be obtained by adding an offset (for example 30°) if only three Hall-effect sensors are available, as is for example illustrated in Fig. 5. An alternative concept may rely on six sensors (three per channel or six per machine) to provide the position signals in Figs. 8 and 10.

Concentrated winding topology generators are good candidates for implementing the disclosed method not only because sensorless methods may fail but also because 30° shift displaced windings (dual three-phase generator) may offer cancellation of 6f torque ripple with the position signals of Fig. 8. Typically, a (single/dual) three-phase distributed winding generator may show a large torque ripple at 6f, whereas a dual three-phase concentrated winding generator may show a low torque ripple at 12f (see for example Fig. 9). The six Hall-effect sensors provide two position signals displaced by a time difference introduced by the 30° physical displacement. It is worth noting that the difference in θe2 between Figs. 5 and 8.

In Fig. 7, six sensors are utilized having position updated every 30° according to Fig. 10. The increased resolution of the scheme in Fig. 10 provides the same level of torque ripple, whereas average torque is increased by 3%. The reduction of the maximum position error from 30° to 15° becomes obvious in the waveform of the reference currents (not explicitly shown). Therefore, the generator operation may be more efficient.

It is worth noting that the torque waveforms in Fig. 11 for the two channels perfectly overlay, meaning that this approach is applicable to distributed winding generators without phase-shift between channels. For the dual three-phase concentrated winding generator, the sensor placement can be quite simple by allocating all of them in the air ducts so that between two sets of Hall-sensors, there is a 30° phase-shift and between the sensors in each set, there is a 120° shift. For an integer slot distributed winding machine, to have the 30° phase-shift some the sensors may have to be placed at undesirable locations other than the airducts, for example at the location of the coils.

Cancellation of torque ripples due to 6f harmonics in permanent magnet flux may not be fully achieved as a result of non-sinusoidal phase currents. Slight sensor misalignments may also lead to torque ripples which, however, may be reduced by the rate limitation (see for example Figs. 14, 15, 16) .

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of vector control of a permanent magnet synchronous electrical machine system (6), in particular of a wind turbine (1), comprising a stator (28) with stator windings (7, 8) and a rotor (30) with permanent magnets (31), the method comprising:
obtaining measurement signals (24a,b,c) from at least three Hall-sensors (21,22,23) installed at predetermined positions at the stator (28);
determining an electrical rotor position (θe1, θe2) based on the measurement signals (24a,b,c) of the at least three Hall-sensors;
utilizing the determined electrical rotor position (θe1, θe2), in particular as the sole position information, for vector control of the electrical machine system (6).

2. Method according to the preceding claim, wherein determining the electrical rotor position (θe1) is based on a combination of observed high and low states of the measurement signals (24a,b,c) of the at least three Hall-sensors (21, 22, 23) enabling determination of the rotor position to be within one of plural angle ranges (60), wherein the number of angle ranges is in particular 6 or 12, each angle range (60) spanning in particular 60° or 30°; and/or
wherein raw outputs of the Hall sensors are binary signals from digital type sensors, or analogue signals, in particular indicating strength of magnetic field, which are processed or converted to binary signals, comprising a high state and a low state.

3. Method according to one of the preceding claims, wherein determining the electrical rotor position (θe1) comprises at least one of:
determining a preliminary rotor position (42) to be in one plural angle ranges (60);
applying error compensation (43) of the preliminary rotor position using rotation test data (44), in particular involving adding a constant or variable offset angle to the preliminary rotor position.

4. Method according to the preceding claim, wherein determining the electrical rotor position comprises:
applying an angle shifter (46) to the preliminary position (42) or the error compensated preliminary position (45, 47) to obtain a shifted electrical rotor position (47, θe2) and/or
wherein determining the electrical rotor position comprises:
applying a rate limitation (48) to the preliminary position (42) or the error compensated preliminary position (45, 47) to obtain a rate limited rotor position (49, 50, θe1_rate_limited, θe2_rate_limited).

5. Method according to the preceding claim, the rate limitation limiting the rate of change of the rotor position, wherein the allowed rate of change is in particular adjustable,
wherein the rated limited rotor position (49, 50) is in particular obtained by slewing the preliminary rotor position or error compensated preliminary rotor position (45, 47) over a time period.

6. Method according to one of the preceding claims, wherein utilizing the determined electrical rotor position for vector control comprises using the electrical rotor position for frame transformation and optionally for a position controller,
wherein the rotor position is in particular used for Park-transformation and/or inverse Park-transformation of current and/or voltage values.

7. Method according to one of the preceding claims, the method further comprising:
calculating rotor speed (ωe1) based on a time duration between state changes of at least one of the Hall-sensors or based on the rotor position (θe1) evolving with time.

8. Method according to one of the preceding claims, wherein the vector control (38) employs at least one of:
torque control;
rotor position control;
current control;
rotational speed control,
of the machine.

9. Method according to one of the preceding claims, wherein the Hall-sensors (21, 22, 23) are installed at predetermined positions at the stator (28) such as to detect position of magnetic poles of the permanent magnets and such that the three Hall-sensors are electrically offset to each other by 120°, or complementarily 60° if the inverse state of at least one signal is used,
wherein in particular some of the at least three Hall-sensors are installed at or within cooling airducts of the stator.

10. Method according to one of the preceding claims, wherein the at least three Hall-sensors comprise a first set of at least three Hall-sensors and at least one second set of at least three Hall-sensors, wherein the first set is electrically displaced by 30° relative to the second set.

11. Method according to one of the preceding claims, wherein the method is performed during low rotor speed, in particular between 0% and 20% of rated speed,
wherein the method is in particular performed for starting, running at low rotational speed exhibiting low torque ripple.

12. Method according to one of the preceding claims, wherein at least one of the following holds:
the stator (28) has concentrated winding topology or distributed winding topology providing three phases;
the stator (28) has at least one or more stator winding set(s) (7, 8), each providing plural phases, in particular three phases;
the machine comprises a three phase generator having at least one or more set(s) of stator windings (7, 8) each of which is connected to a converter (9, 10);
at least one converter (9, 10) electrically connected to the stator windings is controlled based on the rotor position (θe1).

13. Arrangement (20) for vector control (38) of a permanent magnet synchronous electrical machine system (6), in particular of a wind turbine, comprising a stator (28) with stator windings (7,8) and a rotor (30) with permanent magnets (31), the arrangement comprising:
at least three Hall-sensors (21,22,23) installed at predetermined positions at the stator (30) and configured to generate measurement signals (24a,b,c) indicating proximity of magnet poles;
a determining section (25) configured to determine an electrical rotor position (θe1) based on the measurement signals of the at least three Hall-sensors; and
a control section (26) configured to utilize the determined electrical rotor position for vector control of the electrical machine system (6).

14. Permanent magnet synchronous electrical machine system (6), in particular of a wind turbine, comprising:
a stator (28) with stator windings (7,8);
a rotor (30) with permanent magnets (31);
at least one converter (9,10) electrically connected to the stator windings; and
an arrangement (20) for vector control according to the preceding claim communicatively coupled to the at least one converter (9,10).

15. Wind turbine (1), comprising:
a permanent magnet synchronous electrical machine system (6) according to the preceding claim.
